# EUROPÄISCHE PATENTSCHRIFT

(11) **EP 3 927 955 B1**
(45) Veröffentlichungstag und Bekanntmachung des Hinweises auf die Patenterteilung: **03.01.2024**
(21) Anmeldenummer: 19707334.9
(22) Anmeldetag: 20.02.2019
(51) Int. Cl.: F02M 25/08, B60K 15/035, F16K 17/04, F16K 17/30, G05D 7/01, G05D 16/04

(54) **DURCHFLUSSBEGRENZUNGSVORRICHTUNG FÜR EIN KRAFTSTOFFABSPERRVENTIL**
FLOW LIMITING DEVICE FOR A FUEL CUTOFF VALVE
DISPOSITIF DE LIMITATION DE DÉBIT POUR UNE SOUPAPE DE VERROUILLAGE DE CARBURANT

(43) Veröffentlichungstag der Anmeldung: 29.12.2021
(73) Patentinhaber: Pierburg GmbH, 41460 Neuss (DE)
(72) Erfinder: WAGNER, Juri, 41460 Neuss (DE); WANZEK, Tim, 41460 Neuss (DE); TAMASI, Jessica, 41460 Neuss (DE)
(74) Vertreter: terpatent Patentanwälte ter Smitten Eberlein-Van Hoof Rütten Daubert
(86) Internationale Anmeldenummer: PCT/EP2019/054202
(87) Internationale Veröffentlichungsnummer: WO 2020/169192

(56) Entgegenhaltungen:
- DE-A1- 2 439 287
- DE-A1-102017 208 644
- US-A- 1 944 088
- US-A1- 2013 340 890

## Beschreibung

Die Erfindung betrifft eine Durchflussbegrenzungsvorrichtung für ein Kraftstoffabsperrventil mit einem Strömungsgehäuse, welches einen Kanal ausbildet, einem Durchflussbegrenzungselement, welches im Kanal angeordnet ist, und einer Feder, die eine Kraft auf das Durchflussbegrenzungselement in eine Öffnungsrichtung des Durchflussbegrenzungselementes ausübt, die einer durch den Strömungsdruck entstehenden Kraft, die in Schließrichtung auf das Durchflussbegrenzungselement wirkt, entgegengerichtet ist, wobei das Durchflussbegrenzungselement in einer ersten Endposition, in der die auf das Durchflussbegrenzungselement wirkende Kraft der Feder größer ist als die Kraft durch den Strömungsdruck einen größeren Durchströmungsquerschnitt freigibt als in einer zweiten Endposition, in der die auf das Durchflussbegrenzungselement wirkende Kraft durch den Strömungsdruck größer ist als die Kraft der Feder.

Derartige Durchflussbegrenzungsvorrichtungen werden in Tankentlüftungssystemen verwendet, um sicherzustellen, dass der Druck durch im Tank verdampfenden Kraftstoff nicht zu hoch wird. Hierzu wird der Kraftstoffdampf über ein Tankentlüftungsventil einem Aktivkohlefilterbehälter zugeführt, über den die im Dampf enthaltenen Kohlenwasserstoffe gespeichert werden, um deren Austreten in die Umgebung zu verhindern. Der Aktivkohlefilter kann entweder mit der angesaugten Luft des Verbrennungsmotors aus dem Saugrohr oder überseparate Sekundärluftgebläse regeneriert werden. Durch die Durchflussbegrenzungsvorrichtungen wird sichergestellt, dass nachfolgende Ventile nicht durch zu hohe Drücke belastet werden, die zu einer Fehlfunktion führen können.

Um dies zu realisieren sind mechanische Systeme zur Drosselung des Volumenstroms bekannt, bei denen als kraftgebendes Element eine Feder genutzt wird, durch die eine Mindestaktivierungskraft durch den anstehenden Volumenstrom festgelegt wird. Die Aktivierungskraft entsteht somit durch das Anströmen einer Stirnfläche des Begrenzungselementes, die als Kraft am Staupunkt entgegen der Federkraft wirkt.

Entsprechend weisen die bekannten Durchflussbegrenzungsvorrichtungen einen Schaltpunkt auf, an dem der zur Verfügung stehende Durchströmungsquerschnitt bei zu stark ansteigendem Druck durch Verschiebung des Durchflussbegrenzungselementes verringert wird, um den durchtretenden Volumenstrom zu reduzieren. In den meisten bekannten Ausführungen entsteht jedoch gerade bei geringen Durchflüssen, als vor dem Schaltpunkt des Durchflussbegrenzers ein sehr hoher Druckverlust.

Ein Kraftstoffabsperrventil mit einem Durchflussbegrenzer, bei dem der Druckverlust bei geringen Volumenströmen verringert wird, ist beispielsweise aus der EP 2 665 913 B1 bekannt. Wenn das Absperrventil öffnet kann Kraftstoffdampf durch eine innere kleine Düse des Durchflussbegrenzers und durch einen zusätzlichen Querschnitt, der durch ein axial verschiebbares Schließglied beherrscht wird strömen. Wird die Druckdifferenz zwischen dem Einlass und dem Auslass zu groß, übersteigt die auf das Schließglied wirkende Kraft die Kraft der entgegengesetzt wirkenden Feder und das Schließglied wird gegen seinen Ventilsitz gedrückt, so dass nur noch der innere Querschnitt der Düse durchströmt werden kann, wodurch der maximale Durchfluss zuverlässig begrenzt wird.

Des Weiteren ist aus der DE 10 2017 208 644 A1 eine Ventilanordnung für einen Fluidtank bekannt, bei der ein Durchflussbegrenzungselementes in einem Kanal angeordnet ist, der sich zunächst stetig verengt und im Folgenden zylindrisch ausgebildet ist. Das Durchflussbegrenzungselement weist jedoch im zylindrischen Abschnitt des Kanals verschiedene Querschnittssprünge auf.

Problematisch an einer derartigen Ausführungsform ist es jedoch, dass der Schaltpunkt dieses Durchflussbegrenzers nur sehr schwierig festzulegen ist, da im geöffneten Zustand des Durchflussbegrenzers hohe Druckverluste durch verstärkte Wirbelbildung beim Durchströmen außerhalb des kleinen inneren Querschnitts entstehen, die dazu führen, dass kein eindeutiger Öffnungszeitpunkt in Abhängigkeit des anliegenden Staudruckes festgelegt werden kann.

Es ist daher Aufgabe der Erfindung, eine Durchflussbegrenzungsvorrichtung, insbesondere für ein Kraftstoffabsperrventil zur Verfügung zu stellen, bei der einerseits der Gesamtdruckverlust gering ist und andererseits ein Schaltpunkt und der maximale Volumenstrom eindeutig festgelegt werden können. Des Weiteren soll ein Schalten bereits bei relativ geringen Durchflüssen möglich sein, ohne das Federelement in seiner Federstärke zu weit verringern zu müssen.

Diese Aufgabe wird durch eine Durchflussbegrenzungsvorrichtung mit den Merkmalen des Hauptanspruchs 1 gelöst.

Dadurch, dass der Durchströmungsquerschnitt in beiden Endpositionen durch einen umlaufenden Spalt gebildet ist, der zwischen dem Durchflussbegrenzungselement und dem umliegenden Strömungsgehäuse angeordnet ist, wobei der Durchströmungsquerschnitt zwischen dem Durchflussbegrenzungselement und dem umliegenden Strömungsgehäuse in Axialrichtung bis zu einem engsten Durchströmungsquerschnitt stetig abnimmt und ab dem engsten Durchströmungsquerschnitt stetig zunimmt, wird in beiden Endstellungen eine reine Düsenströmung geschaffen, bei der keine Druckverlustsprünge beim Öffnen oder Schließen des Durchflussbegrenzungselementes entstehen, so dass ein eindeutiger Schaltpunkt festgelegt werden kann. So wird zunächst eine druckverlustarme Beschleunigung zwischen den beiden Oberflächen erzielt, durch welche eine Niederdruckzone geschaffen wird, welche den Differenzdruck vergrößert und so den Öffnungszeitpunkt hin zu geringeren Absolutdrücken an der Anströmseite verschiebt. Durch die folgende allmähliche Entspannung bleiben die Gesamtdruckverluste sehr gering. Durch diese Ausführung kann das Schaltverhalten sehr präzise abgestimmt werden.

Vorzugsweise ist eine Funktion des Durchströmungsquerschnitts aufgetragen über die Länge des Durchflussbegrenzungselements von einer Anströmkante zu einer Abströmkante des Durchflussbegrenzungselements differenzierbar, was bedeutet, dass keine Querschnittssprünge auftreten, die zu einer Wirbelbildung führen würden. Entsprechend werden die auftretenden Totaldruckverluste deutlich reduziert.

Zusätzlich ist es vorteilhaft, wenn das Strömungsgehäuse die Form einer Venturidüse aufweist, wobei das Durchflussbegrenzungselement über den engsten Querschnitt der Venturidüse hinaus in einen anschließenden Diffusor ragt. Auch dies führt zu einer Strömungsberuhigung mit geringen Druckverlusten. Durch die Venturidüse wird der Differenzdruck zwischen der Frontseite und der Rückseite des Durchflussbegrenzungselementes noch einmal erhöht, so dass die Öffnungskraft bei gleicher Federkennlinie gesenkt werden kann, da die Staudruckfläche und die Federkennlinie nicht mehr die einzigen Variablen zur Bestimmung des Öffnungsdruckes sind. Entsprechend kann das Durchflussbegrenzungselement kleiner gebaut werden, da bei gleichen Durchmessern höhere Öffnungskräfte wirken.

Vorzugsweise ist eine radiale Außenwand des Durchflussbegrenzungselements stetig zur Mittelachse zulaufend ausgebildet, wodurch der Strömungswiderstand verringert wird. So kann bei nicht geschaltetem Durchflussbegrenzungselement, also größerem Öffnungsquerschnitt bei Förderung des Gases mittels einer Pumpe deren Drehzahl und damit auch deren Stromverbrauch bei gleichem Volumenstrom reduziert werden.

In einer bevorzugten Ausbildung der Erfindung bildet die radiale Außenwand des Durchflussbegrenzungselements von der Anströmkante zur Abströmkante einen Strömungskörper mit einem ersten konvexen Abschnitt, einen sich daran anschließenden zweiten konkaven Abschnitt sowie einen sich daran anschließenden dritten konvexen Abschnitt. So kann mit geringen Druckverlusten bei einfacher Herstellbarkeit, der verringerte Schaltdruck erreicht werden.

Insbesondere ist es vorteilhaft, wenn der Strömungskörper rotationssymmetrisch ist, so dass sich dieser an übliche runde Rohre anpasst, ohne dass über den Querschnitt verschiedene Strömungen entstehen.

In einer bevorzugten Ausführungsform ist der zweite, konkave Abschnitt des Strömungskörpers des Durchflussbegrenzungselementes in beiden Endpositionen innerhalb des engsten Querschnitts der Venturidüse des Strömungsgehäuses angeordnet. Auch diese Ausführung führt zu einer bevorzugten wirbelfreien Strömung in beiden Schaltzuständen.

Des Weiteren sind vorteilhafterweise am Durchflussbegrenzungselement zumindest drei Stege ausgebildet, die durch einen sich über einen Umfang erstreckenden Radialspalt an einer Innenwand des Strömungsgehäuses nach radial außen ragen und auf die die Kraft der Feder wirkt.

Entsprechend erfolgt die Befestigung und Beaufschlagung des Durchflussbegrenzungselementes außerhalb des durchströmten Bereiches, was erneut den Druckverlust reduziert. Zusätzlich besteht eine zuverlässige Befestigung des Durchflussbegrenzungselementes im Kanal.

Des Weiteren ist es vorteilhaft, wenn die Feder zwischen der Innenwand des Strömungsgehäuses und einer Außenwand des Strömungsgehäuses vorgespannt angeordnet ist, da bei der Ausführung einerseits eine zuverlässige Führung der Feder erreicht wird und andererseits auch die Feder außerhalb des durchströmten Bereiches angeordnet ist. Auch die Montage der Feder wird auf diese Weise vereinfacht.

Zur Herstellung eines zentral ausgebildeten Staupunktes weist das Durchflussbegrenzungselement eine sich von der Anströmkante in das radial Innere des Durchflussbegrenzungselementes erstreckende rotationssymmetrische Einbuchtung auf.

Es wird somit eine Durchflussbegrenzungsvorrichtung geschaffen, mit der bei exakter Auslegung des Schaltpunktes die Druckverluste minimiert und die Öffnungsdrücke reduziert werden können, so dass das Durchflussbegrenzungselement auch in seiner Größe reduziert werden kann.

Ein Ausführungsbeispiel einer erfindungsgemäßen Durchflussbegrenzungsvorrichtung ist in den Figuren dargestellt und wird nachfolgend am Beispiel der Verwendung als Durchflussbegrenzer für ein Kraftstoffabsperrventil beschrieben, wobei auch andere Verwendungen selbstverständlich möglich sind.

Die Figur 1 zeigt schematisch eine Fließbild eines Kraftstofftankentlüftungssystems eines Verbrennungsmotors.

Die Figur 2 zeigt eine Seitenansicht einer erfindungsgemäßen Durchflussbegrenzungsvorrichtung in geschnittener Darstellung in einem ersten Schaltzustand.

Die Figur 3 zeigt eine Seitenansicht der erfindungsgemäßen Durchflussbegrenzungsvorrichtung aus Figur 2 in geschnittener Darstellung in einem zweiten Schaltzustand.

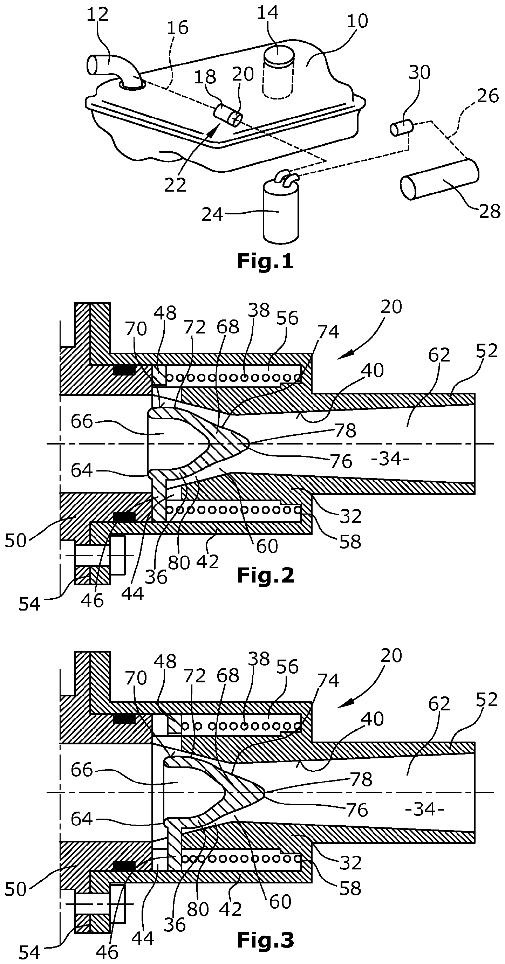

Das in der Figur 1 dargestellte Kraftstofftankentlüftungssystem besteht aus einem Kraftstofftank 10, in dem Kraftstoff gespeichert wird und der über einen Einfüllstutzen 12 mit Kraftstoff befüllbar ist. Im Kraftstofftank ist eine Kraftstoffpumpe 14, über die ein nicht dargestellter Verbrennungsmotor mit dem Kraftstoff versorgt werden kann. Vom Einfüllstutzen 12 zweigt eine Entlüftungsleitung 16 ab, in der ein Kraftstoffabsperrventil 18 mit einer nachgeschalteten Durchflussbegrenzungsvorrichtung 20 als Tankdruckventil 22 eine Einheit bilden. Die Entlüftungsleitung 16 mündet in einem Aktivkohlefilterbehälter 24, in dem der im Tank 10 entstehende Kraftstoffdampf mit den darin enthaltenen Kohlenwasserstoffen gespeichert wird. Aufgrund der endlichen Speicherfähigkeit des Aktivkohlefilters muss dieser regelmäßig gespült werden. Hierzu ist der Aktivkohlefilter über eine Regenerationsleitung 26 mit dem Saugrohr 28 verbunden, wobei in der Regenerationsleitung 26 ein Regenerierventil 30 angeordnet ist, über welches die Regenerierleitung geöffnet oder geschlossen werden kann. Bei Öffnung des Ventils 30 wird der gespeicherte Kraftstoffdampf wieder dem Saugrohr 28 und somit der Verbrennung im Motor zugeführt, so dass ein Austreten der Kraftstoffdämpfe zuverlässig verhindert wird. Das treibende Druckgefälle zur Förderung des Kraftstoffdampfs aus dem Aktivkohlefilterbehälter 24 und zum Saugrohr 28 wird entweder durch den Saugrohrdruck selbst zur Verfügung gestellt oder mittels eines zusätzlichen Regeneriergebläses erzeugt.

Je nach gewähltem Kraftstofftank und angeschlossenem Motor sind unterschiedliche Dampfdrücke im Kraftstofftank 10 zugelassen. Überschreitet dieser Druck einen vorgegebenen Schwellwert wird zunächst das Kraftstoffabsperrventil 18 geöffnet, so dass der Kraftstoffdampf über die Durchflussbegrenzungsvorrichtung 20 zum Aktivkohlebehälter 24 strömen kann.

Diese Durchflussbegrenzungsvorrichtung 20 dient dazu, zu große Durchflüsse zu verhindern, die dazu führen könnten, dass nachfolgende Ventile beschädigt werden oder eine plötzliche Überladung des Aktivkohlefilters stattfindet, bevor dieser regeneriert werden kann.

Eine solche erfindungsgemäße Durchflussbegrenzungsvorrichtung 20 ist in den Figuren 2 und 3 dargestellt. Sie besteht aus einem umliegenden Strömungsgehäuse 32, in dem ein Kanal 34 ausgebildet ist, der vom Kraftstoffdampf bei geöffnetem Kraftstoffabsperrventil 18 durchströmt wird, sowie einem im Kanal angeordneten im Wesentlichen rotationssymmetrisch ausgebildeten Durchflussbegrenzungselement 36.

Das Durchflussbegrenzungselement 36 wird durch eine Feder 38 in eine Richtung vorgespannt, die der Strömungsrichtung des Kraftstoffdampfes entgegen gerichtet ist. Die Feder 38 ist zwischen einer Innenwand 40 des Strömungsgehäuses 32 und einer Außenwand 42 des Strömungsgehäuses 32 in einem im Wesentlichen nicht durchströmten Bereich angeordnet, der fluidisch lediglich über einen umlaufenden Radialspalt 44 an der Innenwand 40 mit dem durch die Innenwand 40 begrenzten durchströmten Kanal 34 verbunden ist. Durch diesen Radialspalt 44 ragen drei Stege 46, die sich vom Durchflussbegrenzungselement 36 nach radial außen erstrecken und an deren radial äußeren Enden ein Ring 48 ausgebildet ist, gegen den die Feder 38 anliegt.

Der Radialspalt 44 entsteht durch das Zusammenfügen zweier Gehäuseteile 50, 52, die über eine Flanschverbindung 54 miteinander verbunden sind, wobei das eine Gehäuseteil 50 lediglich die Innenwand 40 aufweist, während am gegenüberliegenden zweiten Gehäuseteil 52 eine ringförmige, sich in axialer Richtung erstreckende Ausnehmung 56 zwischen der Innenwand 40 und der Außenwand 42 ausgebildet ist, deren Rückwand 58 als Gegenanschlag für die Feder 38 dient und in der die Feder 38 aufgenommen wird.

Die Innenwand 40 des zweiten Gehäuseteils 52 ist als Venturidüse 60 mit einem sich daran anschließenden Diffusor 62 ausgeformt, in deren Inneren das Durchflussbegrenzungselement 36 aufgenommen ist.

Die Stege 46 erstrecken sich von einer Anströmkante 64 des Durchflussbegrenzungselementes 36, an der eine rotationssymmetrische, etwa halbkugelförmige Einbuchtung 66 ausgebildet ist, die sich in das Innere eines Strömungskörpers 68 des Durchflussbegrenzungselementes 36 erstreckt.

Dieser Strömungskörper 68 bildet den umströmten beziehungsweise angeströmten Bereich des Durchflussbegrenzungselementes 36 und weist eine rotationssymmetrische Außenwand 70 auf, die sich stetig in ihrem Durchmesser verringert und deren erster Abschnitt 72 sich von der Anströmkante 64 aus konvex erstreckt, was bedeutet, dass eine Tangente an jeden Punkt dieses Abschnitts 72 im zu diesem Abschnitt 72 des Strömungskörpers 68 radial außen liegenden Bereich angeordnet ist.

An diesen ersten Abschnitt 72 schließt sich ein zweiter, konkaver Abschnitt 74 des Strömungskörpers 68 an, der jedoch konkav geformt ist, was entsprechend bedeutet, dass eine Tangente an jeden Punkt dieses Abschnitts 74 im zu diesem Abschnitt 74 des Strömungskörpers 68 radial innen liegenden Bereich angeordnet ist.

Hieran schließt sich wiederum ein dritter, erneut konvexer Abschnitt 76 an, dessen Ende schließlich punktförmig als Abströmkante des Strömungskörpers 68 zusammenläuft. Die jeweiligen Übergänge zwischen den konvexen und konkaven Abschnitten 72, 74, 76 verlaufen jeweils stetig differenzierbar, also ohne jegliche Querschnittssprünge. Würde entsprechend eine Kante der Außenwand 70 von der Anströmkante 64 zur Abströmkante 78 als Funktion aufgetragen, so wäre auch die Ableitung dieser Funktion eine stetige, sprungfreie Funktion.

Dieser Strömungskörper 68 des Durchflussbegrenzungselementes 36 ist sowohl in einer ersten Endposition als auch in einer zweiten Endposition mit seinem zweiten, konkaven Abschnitt 74 radial innerhalb des engsten Querschnitts der Venturidüse 60 angeordnet.

Entsprechend wird der Strömungskörper 68 bei geöffnetem vorgeschalteten Kraftstoffabsperrventil vollständig umströmt. In der in der Figur 2 dargestellten ersten Endposition ist der entstehende Durchströmungsquerschnitt zwischen der Innenwand 40 des Strömungsgehäuses 32 und dem Strömungskörper 68 größer als in der in der Figur 3 dargestellten zweiten Endposition.

Dies bedeutet, dass bei geschlossenem vorgeschalteten Kraftstoffabsperrventil 18 kein Druck aus dem Durchflussbegrenzungselement 36 wirkt, so dass dieses durch die Kraft der Feder 38 in seine erste Endposition gedrückt wird. Es strömt jedoch kein Kraftstoffdampf. Bei Öffnung des Kraftstoffabsperrventils 18 strömt Kraftstoffdampf zum Durchflussbegrenzungselement 36, wodurch eine Kraft in Schließrichtung auf das Durchflussbegrenzungselement 36 ausgeübt wird. Übersteigt dieser Druck einen eingestellten Schwellendruck wird das Durchflussbegrenzungselement 36 in seine zweite Endposition verschoben, in der der Durchströmungsquerschnitt reduziert ist. Dies hat zur Folge, dass der Volumenstrom, der in Richtung zum Aktivkohlebehälter 24 strömen kann, reduziert wird, der Durchfluss also begrenzt wird. Der Schwellendruck ist somit abhängig von der Kraft der Feder, der Form und Größe der Anströmkante 64 sowie der Form des Strömungskörpers 68.

Durch die besondere Form der Innenwand 40 des Strömungsgehäuses 32 und des Strömungskörpers 68 mit dem den Strömungskörper 68 umgebenden zunächst kontinuierlich sich verringernden und in Strömungsrichtung sich dann allmählich wieder aufweitenden Spalt 80 sowie den angeschlossenen Diffusor 62 hinter der Venturidüse 60, in dem der Strom auf sein vorheriges Geschwindigkeitsniveau langsam wieder verzögert wird, bleibt der entstehende Druckverlust der Durchflussbegrenzungsvorrichtung 20 sehr gering. Es findet stattdessen zunächst eine druckverlustarme Beschleunigung des Kraftstoffdampfes statt, wodurch eine Niederdruckzone geschaffen wird, welche den Differenzdruck und damit die Kraft, die zum Verschieben des Durchflussbegrenzungselementes 36 von der ersten Endposition in die zweite Endposition erforderlich ist, erhöht. Der Schaltzeitpunkt kann somit zu niedrigeren Drücken verschoben werden, ohne die Robustheit des Systems zu ändern, also beispielsweise kleinere Federn verwenden zu müssen. Es wird entsprechend eine zusätzliche Auslegungsvariable geschaffen, wodurch die Auslegung des Schaltverhaltens noch präziser erfolgen kann und gegebenenfalls das Ventil kleiner gebaut werden kann, weil nicht mehr die Feder und die Größe der Staudruckfläche die einzigen Variablen sind. Durch den geringen Druckverlust kann bei aktiver Durchflussbegrenzungsvorrichtung die Pumpendrehzahl oder Größe einer angeschlossenen Pumpe reduziert werden. Auch nachfolgende Ventile werden somit zuverlässig vor Überlastung geschützt.

Es sollte deutlich sein, dass die Erfindung nicht auf dieses beschriebene Ausführungsbeispiel begrenzt ist, sondern verschiedene Modifikationen in der Form des Strömungskörpers und dem Aufbau des umliegenden Gehäuses möglich sind. Auch kann die vorliegende Durchflussbegrenzungsvorrichtung unmittelbar in ein vorgeschaltetes Kraftstoffabsperrventil integriert werden. Zusätzlich kann eine derartige Durchflussbegrenzungsvorrichtung selbstverständlich auch für andere Anwendungen verwendet werden.

## Patentansprüche

1. Durchflussbegrenzungsvorrichtung (20) für ein Kraftstoffabsperrventil (18) mit
einem Strömungsgehäuse (32), welches einen Kanal (34) ausbildet, einem Durchflussbegrenzungselement (36), welches im Kanal (34) angeordnet ist,
einer Feder (38), die eine Kraft auf das Durchflussbegrenzungselement (36) in eine Öffnungsrichtung des Durchflussbegrenzungselementes (36) ausübt, die einer durch den Strömungsdruck entstehenden Kraft, die in Schließrichtung auf das Durchflussbegrenzungselement (36) wirkt, entgegen gerichtet ist, wobei das Durchflussbegrenzungselement (36) in einer ersten Endposition, in der die auf das Durchflussbegrenzungselement (36) wirkende Kraft der Feder (38) größer ist als die Kraft durch den Strömungsdruck einen größeren Durchströmungsquerschnitt freigibt als in einer zweiten Endposition, in der die auf das Durchflussbegrenzungselement (36) wirkende Kraft durch den Strömungsdruck größer ist als die Kraft der Feder (38),
wobei der Durchströmungsquerschnitt in beiden Endpositionen durch einen umlaufenden Spalt (80) gebildet ist, der zwischen dem Durchflussbegrenzungselement (36) und dem umliegenden Strömungsgehäuse (32) angeordnet ist, wobei der Durchströmungsquerschnitt zwischen dem Durchflussbegrenzungselement (36) und dem umliegenden Strömungsgehäuse (32) in Axialrichtung bis zu einem engsten Durchströmungsquerschnitt stetig abnimmt,
**dadurch gekennzeichnet, dass**
der Durchströmungsquerschnitt ab dem engsten Durchströmungsquerschnitt stetig zunimmt.

2. Durchflussbegrenzungsvorrichtung für ein Kraftstoffabsperrventil nach Anspruch 1,
**dadurch gekennzeichnet, dass**
eine Funktion des Durchströmungsquerschnitts aufgetragen über die Länge des Durchflussbegrenzungselements (36) von einer Anströmkante (64) zu einer Abströmkante (78) des Durchflussbegrenzungselements (36) differenzierbar ist.

3. Durchflussbegrenzungsvorrichtung für ein Kraftstoffabsperrventil nach einem der vorhergehenden Ansprüche,
**dadurch gekennzeichnet, dass**
das Strömungsgehäuse (32) die Form einer Venturidüse (60) aufweist, wobei das Durchflussbegrenzungselement (36) über den engsten Querschnitt der Venturidüse (60) hinaus in einen anschließenden Diffusor (62) ragt.

4. Durchflussbegrenzungsvorrichtung für ein Kraftstoffabsperrventil nach einem der vorhergehenden Ansprüche,
**dadurch gekennzeichnet, dass**
eine radiale Außenwand (70) des Durchflussbegrenzungselements (36) stetig zu einer Mittelachse zulaufend ausgebildet ist.

5. Durchflussbegrenzungsvorrichtung für ein Kraftstoffabsperrventil nach den Ansprüchen 2 und 4,
**dadurch gekennzeichnet, dass**
die umströmte Außenwand (70) des Durchflussbegrenzungselements (36) von der Anströmkante (64) zur Abströmkante (78) einen Strömungskörper (68) mit einem ersten konvexen Abschnitt (72), einen sich daran anschließenden zweiten konkaven Abschnitt (74) sowie einen sich daran anschließenden dritten konvexen Abschnitt (76) bildet.

6. Durchflussbegrenzungsvorrichtung für ein Kraftstoffabsperrventil nach Anspruch 5,
**dadurch gekennzeichnet, dass**
der Strömungskörper (68) rotationssymmetrisch ist.

7. Durchflussbegrenzungsvorrichtung für ein Kraftstoffabsperrventil nach Anspruch 5 oder 6,
**dadurch gekennzeichnet, dass**
der zweite, konkave Abschnitt (74) des Strömungskörpers (68) des Durchflussbegrenzungselementes (36) in beiden Endpositionen innerhalb des engsten Querschnitts der Venturidüse (60) des Strömungsgehäuses (32) angeordnet ist.

8. Durchflussbegrenzungsvorrichtung für ein Kraftstoffabsperrventil nach einem der vorhergehenden Ansprüche,
**dadurch gekennzeichnet, dass**
am Durchflussbegrenzungselement (36) zumindest drei Stege (46) ausgebildet sind, die durch einen sich über einen Umfang erstreckenden Radialspalt (44) an einer Innenwand (40) des Strömungsgehäuses (32) nach radial außen ragen und auf die die Kraft der Feder (38) wirkt.

9. Durchflussbegrenzungsvorrichtung für ein Kraftstoffabsperrventil nach Anspruch 8,
**dadurch gekennzeichnet, dass**
die Feder (38) zwischen der Innenwand (40) des Strömungsgehäuses (32) und einer Außenwand (42) des Strömungsgehäuses (32) vorgespannt angeordnet ist.

10. Durchflussbegrenzungsvorrichtung für ein Kraftstoffabsperrventil nach einem der Ansprüche 2 bis 9,
**dadurch gekennzeichnet, dass**
das Durchflussbegrenzungselement (36) eine sich von der Anströmkante (64) in das radial Innere des Durchflussbegrenzungselement (36) ersteckende rotationssymmetrische Einbuchtung (66) aufweist.

## Claims

1. Flow limiting device (20) for a fuel shut-off valve (18) with
a flow housing (32) which configures a channel (34)
a flow limiting element (36) arranged in the channel (34),
a spring (38) which exerts a force on the flow limiting element (36) in an opening direction of the flow limiting element (36), which force is directed against a force which is produced by the flow pressure and acts on the flow limiting element (36) in the closing direction,
wherein the flow limiting element (36) in a first end position, in which the force of the spring (38) acting on the flow limiting element (36) is greater than the force due to the flow pressure, opens a larger flow cross-section than in a second end position, in which the force due to the flow pressure acting on the flow limiting element (36) is greater than the force of the spring (38),
wherein the flow cross-section in both end positions is defined by a circumferential gap (80) arranged between the flow limiting element (36) and the surrounding flow housing (32), wherein the flow cross-section between the flow limiting element (36) and the surrounding flow housing (32) decreases continuously in the axial direction down to a narrowest flow cross-section,
**characterised in that**
the flow cross-section increases continuously from the narrowest flow cross-section.

2. Flow limiting device for a fuel shut-off valve according to claim 1,
**characterised in that**
a function of the flow cross-section is differentiable over the length of the flow limiting element (36) from an upstream edge (64) to a downstream edge (78) of the flow limiting element (36).

3. Flow limiting device for a fuel shut-off valve according to one of the preceding claims,
**characterised in that**
the flow housing (32) comprises the shape of a Venturi nozzle (60), wherein the flow limiting element (36) protrudes beyond the narrowest cross-section of the Venturi nozzle (60) into an adjacent diffuser (62).

4. Flow limiting device for a fuel shut-off valve according to one of the preceding claims,
**characterised in that**
a radial outer wall (70) of the flow limiting element (36) is configured to continuously taper towards a centre axis.

5. Flow limiting device for a fuel shut-off valve according to claims 2 and 4,
**characterised in that**
the outer wall (70) of the flow limiting element (36) around which the flow passes defines a flow body (68) from the leading edge (64) to the trailing edge (78) with a first convex portion (72), an adjacent second concave portion (74) and an adjacent third convex portion (76).

6. Flow limiting device for a fuel shut-off valve according to claim 5,
**characterised in that**
the flow body (68) is rotationally symmetrical.

7. Flow limiting device for a fuel shut-off valve according to claim 5 or 6,
**characterised in that**
the second, concave portion (74) of the flow body (68) of the flow limiting element (36) is arranged within the narrowest cross-section of the Venturi nozzle (60) of the flow housing (32) in both end positions.

8. Flow limiting device for a fuel shut-off valve according to one of the preceding claims,
**characterised in that**
at least three webs (46) are configured at the flow limiting element (36), which webs project radially outwards through a radial gap (44) extending over a circumference at an inner wall (40) of the flow housing (32) and on which the force of the spring (38) acts.

9. Flow limiting device for a fuel shut-off valve according to claim 8,
**characterised in that**
the spring (38) is arranged pretensioned between the inner wall (40) of the flow housing (32) and an outer wall (42) of the flow housing (32).

10. Flow limiting device for a fuel shut-off valve according to any one of claims 2 to 9,
**characterised in that**
the flow limiting element (36) comprises a rotationally symmetrical recess (66) extending from the leading edge (64) into the radial interior of the flow limiting element (36).

## Revendications

1. Dispositif de limitation de l'écoulement (20) pour une vanne de fermeture de carburant (18) avec
un boîtier fluidique (32) définissant un canal (34),
un élément de limitation de l'écoulement (36), qui est disposé dans le canal (34),
un ressort (38) qui exerce une force sur l'élément de limitation de l'écoulement (36) dans une direction d'ouverture de l'élément de limitation de l'écoulement (36), force qui est dirigée à l'encontre d'une force générée par la pression d'écoulement et qui agit sur l'élément de limitation de l'écoulement (36) dans la direction de fermeture,
l'élément de limitation de l'écoulement (36) libérant une section transversale d'écoulement plus grande dans une première position finale, dans laquelle la force du ressort (38) agissant sur l'élément de limitation de l'écoulement (36) est supérieure à la force due à la pression d'écoulement, que dans une deuxième position finale, dans laquelle la force due à la pression d'écoulement agissant sur l'élément de limitation de l'écoulement (36) est supérieure à la force du ressort (38),
la section transversale d'écoulement étant constituée dans les deux positions finales par une fente périphérique (80) qui est disposée entre l'élément de limitation d'écoulement (36) et le boîtier fluidique (32) environnant, la section transversale d'écoulement entre l'élément de limitation d'écoulement (36) et le boîtier fluidique (32) environnant diminuant constamment en direction axiale jusqu'à une section transversale d'écoulement la plus étroite,
**caractérisé en ce que**
la section transversale d'écoulement augmente constamment à partir de la section transversale d'écoulement la plus étroite.

2. Dispositif de limitation de l'écoulement pour une vanne de fermeture de carburant selon la revendication 1,
**caractérisé en ce que**
une fonction de la section transversale d'écoulement, tracée sur la longueur de l'élément de limitation d'écoulement (36), peut être différenciée d'un bord d'arrivée (64) à un bord de sortie (78) de l'élément de limitation d'écoulement (36).

3. Dispositif de limitation de l'écoulement pour une vanne de fermeture de carburant selon l'une des revendications précédentes,
**caractérisé en ce que**
le boîtier fluidique (32) comprend la forme d'un venturi (60), l'élément de limitation de l'écoulement (36) faisant saillie au-delà de la section transversale la plus étroite du venturi (60) dans un diffuseur (62) adjacent.

4. Dispositif de limitation de l'écoulement pour une vanne de fermeture de carburant selon l'une des revendications précédentes,
**caractérisé en ce que**
une paroi extérieure radiale (70) de l'élément de limitation de l'écoulement (36) est conçue pour converger de manière continue vers un axe central.

5. Dispositif de limitation de l'écoulement pour une vanne de fermeture de carburant selon les revendications 2 et 4,
**caractérisé en ce que**
la paroi extérieure (70) entourée de l'élément de limitation de l'écoulement (36) forme, du bord amont (64) au bord aval (78), un corps d'écoulement (68) avec une première section convexe (72), une deuxième section concave (74) qui s'y ajoute ainsi qu'une troisième section convexe (76) qui s'y ajoute.

6. Dispositif de limitation de l'écoulement pour une vanne de fermeture de carburant selon la revendication 5,
**caractérisé en ce que**
le corps d'écoulement (68) est à symétrie de révolution.

7. Dispositif de limitation de l'écoulement pour une vanne de fermeture de carburant selon la revendication 5 ou 6,
**caractérisé en ce que**
la deuxième section concave (74) du corps d'écoulement (68) de l'élément de limitation de l'écoulement (36) est située, dans les deux positions d'extrémité, à l'intérieur de la section transversale la plus étroite du venturi (60) du boîtier fluidique (32).

8. Dispositif de limitation de l'écoulement pour une vanne de fermeture de carburant selon l'une des revendications précédentes,
**caractérisé en ce que**
au moins trois nervures (46) sont formées sur l'élément de limitation de l'écoulement (36), qui font saillie radialement vers l'extérieur à travers une fente radiale (44) s'étendant sur une périphérie, sur une paroi intérieure (40) du boîtier fluidique (32), et sur lesquelles agit la force du ressort (38).

9. Dispositif de limitation de l'écoulement pour une vanne de fermeture de carburant selon la revendication 8,
**caractérisé en ce que**
le ressort (38) est disposé de manière précontrainte entre la paroi interne (40) du boîtier fluidique (32) et une paroi externe (42) du boîtier fluidique (32).

10. Dispositif de limitation de l'écoulement pour une vanne de fermeture de carburant selon l'une des revendications 2 à 9,
**caractérisé en ce que**
l'élément de limitation de l'écoulement (36) comprend un renfoncement (66) à symétrie de révolution s'étendant à partir du bord d'attaque (64) vers l'intérieur radial de l'élément de limitation de l'écoulement (36).
